# EUROPÄISCHE PATENTSCHRIFT

(11) **EP 3 280 300 B1**
(45) Veröffentlichungstag und Bekanntmachung des Hinweises auf die Patenterteilung: **26.12.2018**
(21) Anmeldenummer: 16710992.5
(22) Anmeldetag: 22.03.2016
(51) Int. Cl.: A47J 31/36, A47J 31/46

(54) **GETRÄNKEZUBEREITUNGSMASCHINE**
BEVERAGE PREPARATION MACHINE
MACHINE DE PRÉPARATION DE BOISSONS

(30) Priorität: 08.04.2015 CH 4882015
(43) Veröffentlichungstag der Anmeldung: 14.02.2018
(73) Patentinhaber: Delica AG, 4127 Birsfelden (CH)
(72) Erfinder: AFFOLTER, Roland, 5103 Möriken (CH); BRÖNNIMANN, Markus, 3274 Hermrigen (CH); ZHAO, Miles, Shenzhen City PRC 518101 (CN)
(74) Vertreter: Hepp Wenger Ryffel AG
(86) Internationale Anmeldenummer: PCT/EP2016/056243
(87) Internationale Veröffentlichungsnummer: WO 2016/162203

(56) Entgegenhaltungen:
- EP-A2- 1 961 351
- DE-U1-202006 015 652
- US-A1- 2006 249 030

## Beschreibung

Die vorliegende Erfindung betrifft eine Getränkezubereitungsmaschine, insbesondere eine Kaffeemaschine, mit zwei Brühkammern gemäss dem Oberbegriff von Anspruch 1.

Aus dem Stand der Technik ist bereits eine Vielzahl von Getränkezubereitungsmaschinen bekannt, welche zur Zubereitung eines Mischgetränks, beispielsweise in Form eines Milchkaffees oder eines Cappuccinos, zwei unterschiedliche Kapseln aufnehmen können, welche gleichzeitig und/oder sequentiell verarbeitet werden. Zur gezielten Wasserversorgung der beiden Brühkammern werden Ventile benötigt. Üblicherweise werden Schlauchquetschventile, Magnetventile oder Keramikventile eingesetzt.

Beispielsweise zeigt EP 1 961 351 B1 eine Kaffeemaschine mit zwei Brühkammern, welche sequentiell bedient werden können. Zum Umschalten des Wasserzuflusses von einer ersten Brühkammer auf die zweite Brühkammer kommt ein Zwei-Wege-Keramikventil zum Einsatz. Das Dokument erwähnt ausserdem Magnetventile, welche anstelle des Keramikventils eingesetzt werden können.

Nachteilig im Stand der Technik ist, dass die Ventile verkalken und somit die Dichtheit der Ventile sehr schnell beeinträchtigt ist. Dieses Problem wurde zwar mit Schlauchquetschventilen gelöst, dafür werden diese jedoch bei jedem Schliessvorgang mechanisch hoch belastet, sodass nur eine geringe Standzeit erreicht werden kann.

Es ist Aufgabe der Erfindung, die Nachteile des Standes der Technik zu überwinden. Insbesondere soll eine Getränkezubereitungsmaschine mit zwei Brühkammern zur Verfügung gestellt werden, welche mit einem zuverlässigen Ventil angesteuert werden können. Ausserdem soll ein Ventil mit einer geringen Anzahl beweglicher Teile zur Verfügung gestellt werden.

Diese Aufgabe wird durch eine Getränkezubereitungsmaschine mit den Merkmalen aus Anspruch 1 gelöst. Weitere Ausführungsformen ergeben sich aus den abhängigen Patentansprüchen.

Unter einer Getränkezubereitungsmaschine wird insbesondere eine Maschine verstanden, welche basierend auf Portionenkapseln jegliche Arten von flüssigen Nahrungsmitteln oder Genussmitteln herstellen kann. Dabei wird nicht unterschieden, ob es sich bei dem zubereiteten Nahrungsmittel um Kaffee, Tee, milchhaltige Produkte, Instantsuppen, Babynahrung oder Kraftgetränke handelt. Insbesondere handelt es sich dabei jedoch um eine Maschine, welche ein flüssiges Nahrungsmittel basierend auf einer Portionenkapsel, welche eine Nahrungsmittelsubstanz aufweist, durch Einspritzen einer Flüssigkeit in die Kapsel die Nahrungsmittelsubstanz auflöst, extrahiert, brüht usw. Unter einer Kapsel wird insbesondere auch ein Pad verstanden.

Eine erfindungsgemässe Getränkezubereitungsmaschine, insbesondere Kaffeemaschine, umfasst zwei Brühkammern zur Aufnahme eines Getränkesubstrats und ein Ventil zum Umschalten einer Flüssigkeitszufuhr zu den einzelnen Brühkammern. Das Ventil ist ein Membranventil mit einer Verschlussmembran und weist eine Einlassöffnung zur Flüssigkeitszufuhr sowie eine erste und eine zweite Auslassöffnung für die erste und zweite Brühkammer auf.

Durch die Verwendung eines Membranventils ist eine sehr kostengünstige Ventillösung realisierbar. Ausserdem sind Membranventile unempfindlich gegen Verkalkungen. Die Bewegung der Membran verunmöglicht ein Anlagern von Kalk. Da Membranventile üblicherweise nur einen sehr geringen Hub ausführen, ist auch der Verschleiss der Membran sehr gering und es können hohe Standzeiten gewährleistet werden. Ausserdem kommt in einem Membranventil üblicherweise nur die Membran mit dem zu regelnden Fluidstrom in Berührung, so dass lediglich Abrieb oder Verschleiss der Membran den Fluidstrom kontaminieren kann.

Die Brühkammern können zur direkten Aufnahme eines Getränkesubstrats oder aber zur Aufnahme einer entsprechenden Portionenkapsel ausgestaltet sein. Ebenso ist es denkbar, dass die Maschine eine Vielzahl von Brühkammern aufweist, entsprechend weist das Ventil nicht nur zwei Auslassöffnungen sondern eine entsprechende Vielzahl von Auslassöffnungen auf.

Das Ventil kann für jede Auslassöffnung einen Stössel aufweisen, mit dem die Verschlussmembran auf die entsprechende Auslassöffnung pressbar ist und diese somit verschliesst. Durch die Verwendung individueller Stössel zum Verschliessen der Auslassöffnungen ist auch ein individuelles Steuern des Ventiles möglich. So ist es beispielsweise denkbar, dass das Ventil mit zwei Auslassöffnungen vier unterschiedliche Stellungen hat: beide Auslassöffnungen offen, beide Auslassöffnungen geschlossen, erste Auslassöffnung offen und zweite Auslassöffnung geschlossen, erste Auslassöffnung geschlossen und zweite Auslassöffnung offen. Die Verwendung von Stösseln erlaubt ausserdem ein schonendes Ansteuern und Betätigen der Verschlussmembran. Insbesondere können Reibkräfte eliminiert werden. Die Verschlussmembran wird lediglich ausgelenkt und leicht gedehnt. Je nach Anpressdruck der Stössel wird die Verschlussmembran zusätzlich druckbeaufschlagt. Alternativ kann die Verschlussmembran auch mittels einer Nockenscheibe, Nockenwelle oder anderen Mitteln direkt oder indirekt ausgelenkt werden.

Die Stössel können in einem Führungselement beweglich gelagert sein. Ein Führungselement bewirkt, dass sich die Stössel nur in einer definierten Richtung bewegen können. Beispielsweise wird damit sichergestellt, dass eine Grundfläche der Stössel parallel zu einer Dichtfläche der Auslassöffnungen angeordnet ist und bei einer Stösselbewegung parallel ausgerichtet bleibt. Entsprechend wird auch eine mechanische Belastung der Verschlussmembran klein gehalten.

Das Ventil kann eine Nockenscheibe zum Ansteuern der Stössel aufweisen. Mittels einer Nockenscheibe können die einzelnen Stössel sehr einfach bewegt werden. Die Nockenscheibe zum Ansteuern der Stössel kann drehbeweglich im Ventil gelagert sein. Anstelle einer Nockenscheibe können auch eine Nockenwelle oder andere Betätigungselemente zum Einsatz kommen. Eine Nockenscheibe ist jedoch eine sehr kostengünstige Lösung und kann einfach über ein Getriebe angesteuert werden. Die Nockenscheibe kann eine Drehachse in etwa parallel zu einer Bewegungsrichtung der Stössel aufweisen.

Das Ventil kann ein zweiteiliges Gehäuse aufweisen, wobei vorzugsweise ein erstes Gehäuseteil eine Verteilerplatte umfasst, in der sowohl die Einlassöffnung als auch die Auslassöffnungen ausgebildet und vorzugsweise auch entsprechende Schlauchanschlüsse angeordnet sind. Das zweite Gehäuseteil kann Befestigungsmittel aufweisen, um das Ventil in einer Getränkezubereitungsmaschine befestigen zu können. Solche Befestigungsmittel können beispielsweise Schnapper oder Schraubenaufnahmen sein. Das Ventil kann Schlauchanschlüsse mit einem Interface aufweisen, welches ein schnelles und einfaches Wechseln der Schläuche ermöglicht. Beispielsweise kann jedes Schlauchende mit einem Adapter ausgerüstet sein, welcher sich an das Interface des Schlauchanschlusses ankoppeln lässt.

Das Ventil kann eine erste und eine zweite Durchlassposition aufweisen, in der die erste und/oder die zweite Auslassöffnung offen sind. Entsprechend können die einzelnen an den Auslassöffnungen angeschlossenen Brühkammern individuell oder gleichzeitig mit Wasser beschickt werden.

Die Durchlasspositionen können derart ausgestaltet sein, dass in der ersten Durchlassposition einzig die erste Auslassöffnung offen und in der zweiten Durchlassposition einzig die zweite Auslassöffnung offen ist. Somit kann sichergestellt werden, dass nur jeweils eine Brühkammer mit Wasser beschickt wird. Ein gleichzeitiges Brühen eines Getränkes in beiden Brühkammern wird somit verhindert. Entsprechend kann auch sichergestellt werden, dass in jeder Brühkammer der nötige Extraktionsdruck anliegt, welcher von einer dem Ventil vorgeschalteten Pumpe bereitgestellt wird. Eine solche Konfiguration ist vorteilhaft, wenn eine sequentielle Zubereitung nötig ist, um beispielsweise geschichtete Getränke herzustellen.

Das Ventil kann eine Schliessposition aufweisen in der alle Auslassöffnungen verschlossen sind. Eine solche Ausgestaltung ermöglicht es, dass bei Beendigung des Brühvorgangs keine Flüssigkeit mehr in die Brühkammern nachtropfen kann. Entsprechend wird eine unerwünschte Verschmutzung der Getränkezubereitungsmaschine bzw. ein unnötiges Befüllen einer Abtropfeinrichtung verhindert. Ausserdem kann dadurch verhindert werden, dass Flüssigkeit aus der Brühkammer ins Ventil gelangen kann und dieses kontaminiert. Insbesondere für die Zubereitung von Milchhaltigen Getränken ist dies ein zwingendes Hygienemerkmal, da das Ventil vom Benutzer nicht oder nur mit erheblichem Aufwand gereinigt werden kann.

Das Ventil kann ein Sicherheitsventil sein und eine sich bei einem vorbestimmten Druck öffnenbare Struktur aufweisen. Beispielsweise kann so verhindert werden, dass eine verstopfte Brühkammer zu einer Beschädigung der Pumpe oder der gesamten Maschine führt. Dabei kann das Ventil beispielswiese derart ausgestaltet sein, das es bis zu einem Druck von 18 bar zuverlässig dichtet und ab einem Druck zwischen 20 und 25 bar sich unabhängig von seiner Stellung öffnet um den Druck wieder zu reduzieren. Beispielsweise kann die Verschlussmembran komprimierbar ausgestaltet sein. Somit kann die Dichtwirkung anhand der Anpresskraft auf eine Dichtfläche beeinflusst werden. Selbst bei einem geschlossenen Ventil kann durch einen Überdruck im Ventil die Verschlussmembran komprimiert werden, sodass sich eine eigentlich verschlossene Auslassöffnung öffnet. Beispielsweise ist in der Schliessposition des Ventils, also bei allen verschlossenen Auslassöffnungen, die Anpresskraft der Stössel auf die Verschlussmembran kleiner als die Anpresskraft der Stössel bei einer nur einseitig offenen Auslassöffnung. Somit kann eine gestufte Sicherheitsfunktion erzielt werden. Beispielsweise kann ein Entlasten des allseits geschlossenen Ventils bereits bei einem Druck von 5 bis 8 bar erfolgen. Dies ist vorteilhaft, damit der Druck im Ventil und entsprechend in einer Pumpe und einem Erhitzer der Maschine nach deren Benutzung reduziert werden kann. Trotzdem verhindert das geschlossene Ventil ein nachtropfen nach Beendigung des Brühprozesses. Bei nur einseitig offener Auslassöffnung kann die Sicherheitsfunktion erst später ansprechen, wenn der Anpressdruck der Stössel grösser ist. Somit ist ein Aufbrühen oder Extrahieren des Getränkes unter hohem Druck bis beispielsweise 18 bar möglich. Erst bei Erreichen oder Überschreiten des Druckes von 20 bis 25 bar wird eine verschlossene Auslassöffnung durchlässig.

Umlaufend um jede Auslassöffnung kann eine ebene Dichtfläche angeordnet sein. Eine solche ebene Dichtfläche gewährleistet, dass die Verschlussmembran, welche von einem Stössel auf diese Dichtfläche gepresst wird, gleichmässig anliegt und die Auslassöffnung verschliesst. Durch die ebene Ausgestaltung kann auch der Stössel eine Grundfläche aufweisen, welche eine ebene Fläche umfasst. Solche ebenen Flächen sind einfach herstellbar. Entsprechend wird eine gute Dichtwirkung ermöglicht.

Beispielsweise kann die Dichtfläche einen Durchmesser aufweisen, welcher kleiner oder gleich einem Durchmesser einer Grundfläche des entsprechenden Stössels ist. Es ist jedoch auch denkbar, dass der Durchmesser der Grundfläche des Stössels kleiner ausgestaltet ist als der Durchmesser der Dichtfläche. Dabei ist jedoch zu beachten, dass die Grundfläche des Stössels mindestens auf der Dichtfläche aufliegen soll und entsprechend grösser als der Durchmesser der Auslassöffnung ist. Die Dichtfläche und die Grundfläche des Stössels müssen sich überdecken. Somit sind die Toleranzen bei der Herstellung des Ventils weniger kritisch und können entsprechend grösser gewählt werden. Die Dichtfläche und die Grundfläche des Stössels liegen entsprechend in Ebenen, welche vorzugsweise parallel ausgerichtet sind.

Alternativ wäre es auch denkbar, dass der Stössel so ausgestaltet ist, dass dieser wenigstens teilweise in die Auslassöffnung eindringen kann. Somit erfolgt die Dichtwirkung der Verschlussmembran nicht mehr auf einer ebenen Dichtfläche, vielmehr wird so an einer Dichtfläche verschlossen, welche sich im Eingangsbereich der Auslassöffnung befindet und beispielsweise konisch ausgestaltet ist.

Das Ventil kann mechanisch über einen Antriebshebel von einem Benutzer verstellbar sein. Durch die mechanische Verstellbarkeit wird eine sehr einfache Konstruktion des Ventils ermöglicht. Insbesondere ist das Ventil wenig störungsanfällig, da keine elektrischen und/oder elektronischen Komponenten zur Steuerung des Ventils verwendet werden.

Der Antriebshebel kann beispielsweise direkt mit der Nockenscheibe des Ventils verbunden sein. Somit wirkt eine Bewegung des Antriebshebels direkt auf die Nockenscheibe, welche wiederum die Stössel des Ventils steuert.

Der Antriebshebel kann mit einem Steuerelement eines Benutzerinterfaces der Maschine mechanisch gekoppelt sein. Dabei kann das Steuerelement linear verschiebbar an der Getränkezubereitungsmaschine angeordnet und gelagert sein. Getränkezubereitungsmaschinen weisen üblicherweise ein Benutzerinterface auf, mittels welchem ein Benutzer die Art des gewünschten Getränkes einstellt oder zumindest die Maschine einschaltet. Durch eine mechanische Koppelung mit einem entsprechenden Steuerelement eines Benutzerinterfaces kann wiederum eine sehr einfache und zuverlässige Ansteuerung des Ventils erfolgen.

Das Steuerelement kann an der Getränkezubereitungsmaschine in eine Richtung verschiebbar gelagert sein, welche im Wesentlichen parallel zu einer Bewegungsebene eines üblicherweise verwendeten und von einem Benutzer zu betätigenden Hebels zum Verschliessen der Brühkammern ausgerichtet ist. Insbesondere kann das Steuerelement dabei in Reichweite des Hebels angeordnet sein, so dass der Benutzer in einer ergonomischen Handbewegung gleichzeitig oder unmittelbar nacheinander den Hebel betätigen und das Steuerelement bedienen kann.

Das Steuerelement kann mit einer Maschinensteuerung kombiniert sein. Somit ist es möglich, lediglich mit einem einzigen Steuerelement, welches die Ventilstellung direkt kontrolliert, auch die Getränkezubereitung zu kontrollieren. Beispielsweise kann durch eine Bewegung des Steuerelementes aus einer Mittelstellung die Getränkezubereitungsmaschine aus einem Standby-Modus aufgeweckt werden und bei einer Verschiebung des Steuerelementes bis zu einem Anschlag, bei dem das Ventil richtig gestellt ist, ein Brühvorgang ausgelöst werden. Es versteht sich von selbst, dass für den Brühvorgang eine Pumpe und gegebenenfalls einen Erhitzer in Betrieb genommen werden müssen. Dabei kann die Maschine einen Durchflussmesser aufweisen, welcher nach einer Förderung einer vorbestimmten Flüssigkeitsmenge die Pumpe wieder ausschaltet. alternativ kann dieses Ausschalten der Pumpe jedoch auch vom Benutzer durch Rückstellen des Steuerelementes in die Mittelposition erfolgen.

Der Antriebshebel kann ein Zahnsegment aufweisen, welcher in eine Zahnstange des Steuerelementes eingreift. Eine Koppelung über eine Zahnsegment-Zahnstangen-Kombination ist eine sehr zuverlässige Konstruktionsart und insbesondere einfach zu bewerkstelligen. Ausserdem ist ein unerwünschter Schlupf ausgeschlossen.

Die Nockenscheibe des Ventils kann alternativ von einem Elektromotor mit einem entsprechenden Getriebe und einer Positionserkennung zur korrekten Einstellung der Ventilstellungen angetrieben werden. Beispielsweise kann ein Servomotor oder ein Schrittmotor verwendet werden. Durch eine solche elektro-mechanische Lösung lässt sich das Ventil an beliebiger Stelle in der Maschine einbauen. Trotzdem lässt sich das Ventil durch das Steuerelement, welches am Benutzerinterface der Maschine angeordnet ist, steuern. Es versteht sich von selbst, dass das Steuerelement über entsprechende Schaltkontakte verfügen muss, um die Steuerung des Ventils zu betätigen.

Die Verschlussmembran kann ein komprimierbares Material, insbesondere ein Silikonmaterial oder ein Ethylen-Propylen-DienKautschuk (EPDM), aufweisen. Insbesondere kann die Verschlussmembran auch aus dem komprimierbaren Material bestehen. Solche Materialien sind lebensmittelverträglich und weisen trotzdem gute Eigenschaften in Bezug auf die Dichtfunktion auf.

Anhand von Figuren, welche lediglich Ausführungsbeispiele darstellen, wird die Erfindung in folgendem näher erläutert. Es zeigen:
- Figur 1:: Eine Getränkezubereitungsmaschine mit zwei Brühkammern und einem Umschaltventil aus dem Stand der Technik in schematischer Darstellung,
- Figur 2:: Eine erfindungsgemässe Getränkezubereitungsmaschine in perspektivischer Ansicht,
- Figur 3a:: Ein Ventil der Getränkezubereitungsmaschine aus Figur 2 in einer perspektivischen Ansicht,
- Figur 3b:: Das Ventil aus Figur 3a in einer anderen perspektivischen Ansicht,
- Figur 4:: Das Ventil aus den Figuren 3 mit einem Steuerelement der Getränkezubereitungsmaschine gemäss Figur 2 in perspektivischer Ansicht,
- Figur 5:: Das Ventil aus den Figuren 3 in einer Explosionszeichnung,
- Figur 6:: Das Ventil aus den Figuren 3 in einem Querschnitt durch die Stössel,
- Figur 7a:: Eine schematische Darstellung des Ventils im Querschnitt aus Figur 6 in einer ersten Durchlassposition,
- Figur 7b:: Das Ventil aus 7a in einer Schliessposition,
- Figur 7c:: Das Ventil aus Figur 7a in einer zweiten Durchlassposition.

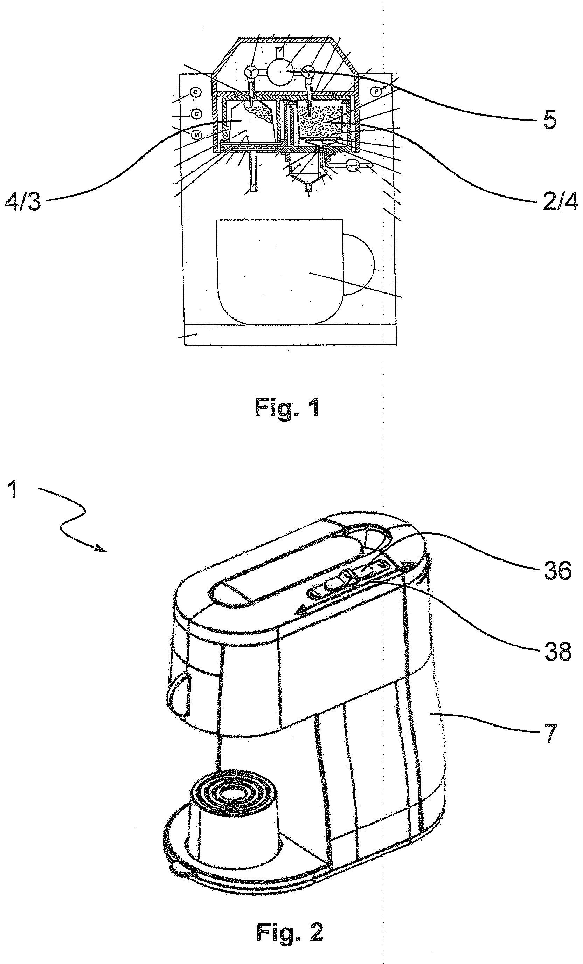

Die Figur 1 zeigt eine Getränkezubereitungsmaschine mit zwei Brühkammern 2, 3 und einem Umschaltventil 5 aus dem Stand der Technik in schematischer Darstellung. In den Brühkammern 2, 3 ist jeweils eine Kapsel aufgenommen, welche ein Getränkesubstrat 4 beinhaltet. Beide Brühkammern weisen einen Injektor auf, welcher die Flüssigkeit in die entsprechende Brühkammer bzw. die entsprechende Kapsel einspritzt. Die Injektoren sind mit dem Umschaltventil 5 verbunden, welches den Wasserzufluss zu den einzelnen Brühkammern 2, 3 steuert.

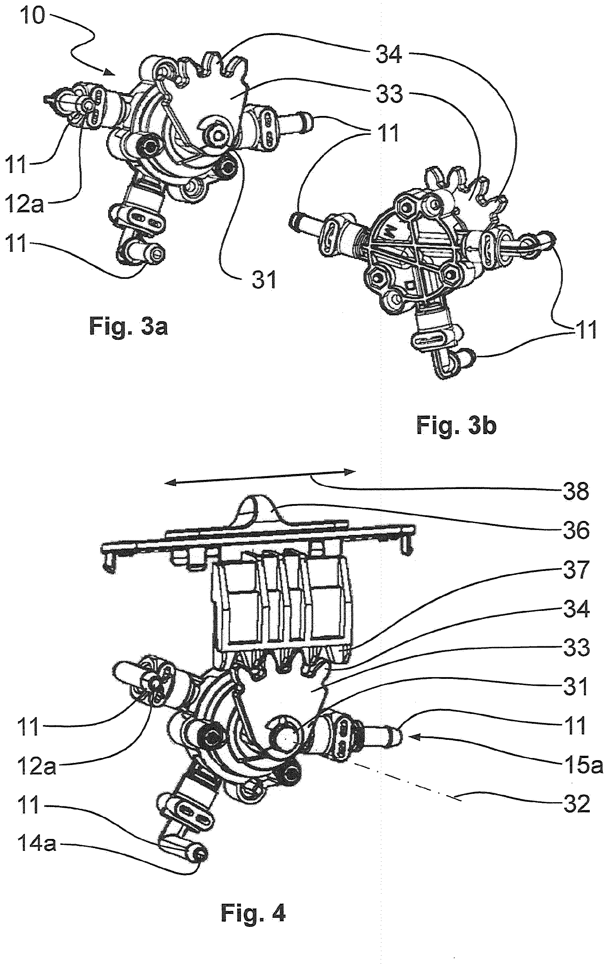

In Figur 2 ist eine erfindungsgemässe Getränkezubereitungsmaschine 1 in perspektivischer Ansicht dargestellt. Die Getränkezubereitungsmaschine 1 weist wie die Getränkezubereitungsmaschine in Figur 1 zwei Brühkammern (nicht gezeigt) auf, welche individuell angesteuert werden können. Hierzu verfügt die Getränkezubereitungsmaschine 1 über ein Steuerelement 36 mittels welchem die entsprechende Brühkammer ausgewählt werden kann. Hierzu ist das Steuerelement 36 in eine Bewegungsrichtung 38 verschiebbar auf der Oberfläche der Getränkezubereitungsmaschine 1 gelagert. Je nach Stellung des Steuerelementes 36 wird Wasser aus einem Wassertank 7 über einen optionalen Wassererhitzer, eine Pumpe und ein Membranventil 10 (siehe Figuren 3 bis 7) in die entsprechende Brühkammer geleitet.

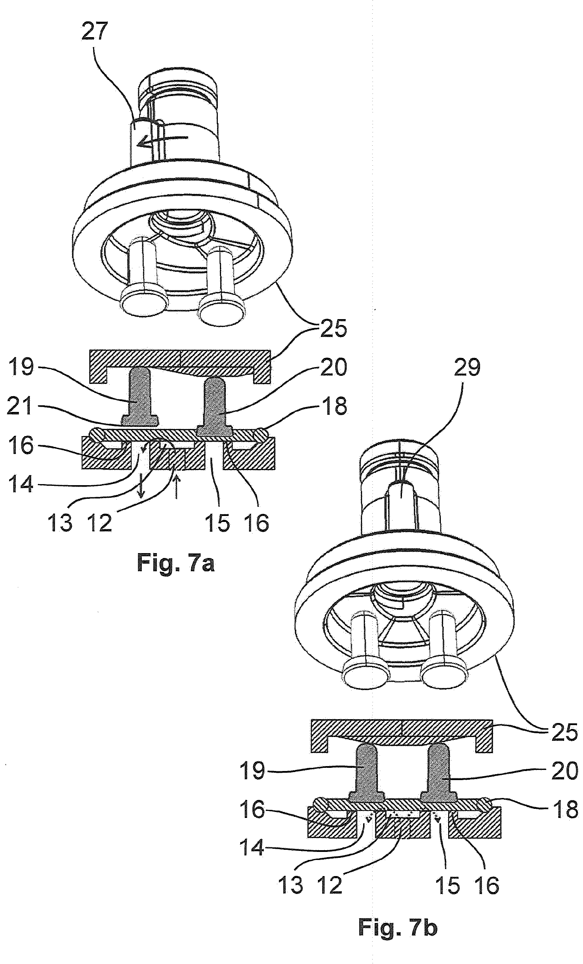

Die Figuren 3a und 3b zeigen ein Membranventil 10 der erfindungsgemässen Getränkezubereitungsmaschine 1 aus Figur 2 in zwei unterschiedlichen perspektivischen Ansichten. Das Membranventil 10 weist drei Schlauchanschlüsse 11 auf, wobei ein Schlauchanschluss einem Einlasskanal 12a, und zwei Schlauchanschlüssen einem ersten bzw. einem zweiten Auslasskanal 14a, 15a (siehe Figuren 4) dienen. Dabei führt der Einlasskanal 12a zu einer Einlassöffnung 12 und der erste bzw. zweite Auslasskanal 14a, 15a je zu einer ersten bzw. zweiten Auslassöffnung 14, 15 (siehe Figuren 7a bis 7c). Das Membranventil 10 weist einen Antriebshebel 33 auf, welcher mit einem Zahnsegment 34 versehen ist und auf einer Antriebswelle 31 des Membranventils 10 sitzt. Durch ein Verstellen des Antriebshebels 33 bzw. durch eine Drehung der Antriebswelle 31 kann die Einlassöffnung und somit der Einlasskanal 12a mit der ersten Auslassöffnung oder mit der zweiten Auslassöffnung verbunden werden.

Die Figur 4 zeigt wiederum das Membranventil aus den Figuren 3, wobei zusätzlich das Steuerelement 36 der erfindungsgemässen Maschine aus Figur 2 dargestellt ist. Wiederum sind drei Schlauchanschlüsse 11 sowie der Einlasskanal 12a und die Auslasskanäle 14a, 15a erkennbar. Das Steuerelement 36 kann in Bewegungsrichtung 38 verschoben werden. Das Steuerelement 36 verfügt dabei über eine Zahnstange 37, welche mit dem Antriebshebel 33 und dem entsprechenden Zahnsegment 34 zusammen wirkt. Durch eine Bewegung des Steuerelementes 36 wird somit der Antriebshebel 33 um die Drehachse 32 gedreht. Diese Drehung wird auf die Antriebswelle 31 des Membranventils übertragen, sodass das Membranventil beispielsweise aus einer Schliessposition 29 in eine erste Durchlassposition 27 oder eine zweite Durchlassposition 28 (siehe Figuren 7a bis 7c) verstellt werden kann.

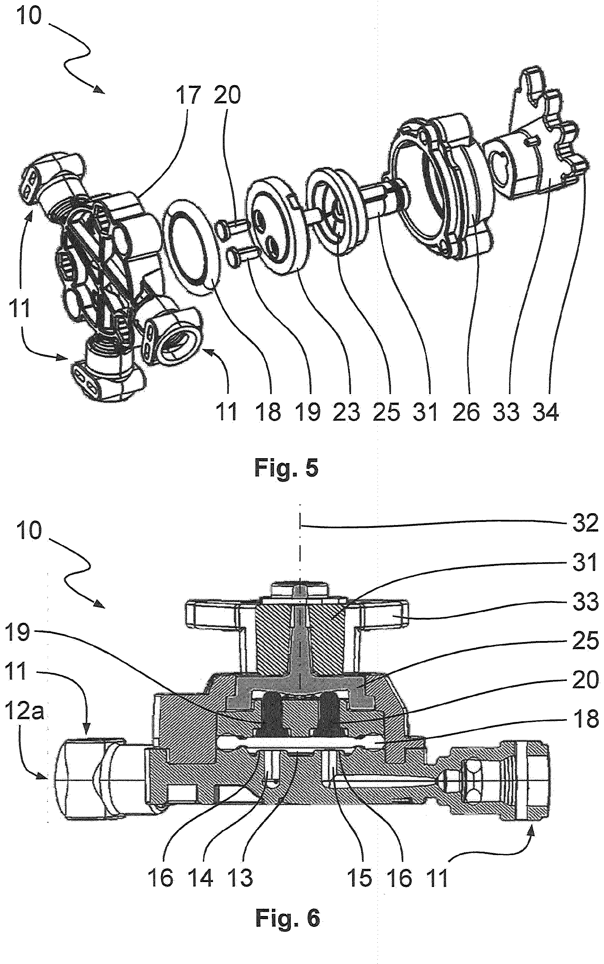

Die Figur 5 zeigt das Membranventil 10 aus Figur 3 in einer Explosionszeichnung. Wiederum zu erkennen sind die drei Schlauchanschlüsse 11, welche den Einlasskanal 12a und die beiden Auslasskanäle bilden. Die Schlauchanschlüsse 11 sind je mit einem Interface versehen, welches ein einfaches Auswechseln des Schlauches ermöglicht. Diese Schlauchanschlüsse 11 sind in einer Verteilerplatte 17 integriert. Das Membranventil 10 weist weiter eine Verschlussmembran 18, welche zum Verschliessen der beiden Auslassöffnungen 14, 15 (siehe Figur 6) auf der Innenseite der Verteilerplatte 17 dienen. Die Verschlussmembran 18 ist im Wesentlichen als plane, kreisförmige Membran mit einem umlaufenden Wulst ausgestaltet. Diese Verschlussmembran 18 wird mittels zweier Stössel 19, 20, welche in einem Führungselement 23 verschiebbar gelagert sind, ausgelenkt. Die beiden Stössel 19, 20 werden dabei von einer Nockenscheibe 25 angetrieben. Die Nockenscheibe 25 weist eine Antriebswelle 31 auf, welche wie in Figur 4 beschrieben mit dem Antriebshebel 33 drehfest verbunden ist. Der Antriebshebel 33 weist ein Zahnsegment 34 auf. Das Membranventil 10 wird von einem Ventilgehäuse 26 und der Verteilerplatte 17 umschlossen. Dabei dichtet die Verschlussmembran 18 nicht nur die einzelnen Auslassöffnungen 14, 15 ab sondern sorgt gleichzeitig mit seinem umlaufenden Wulst zusammen mit dem Führungselement 23 für eine Abdichtung des Ventilraumes 13 (siehe Figur 6). Entsprechend erfolgen die Steuerbewegungen der Stössel 19, 20 und der Nockenscheibe 25 absolut trocken, so dass auch keine Kontamination des Brühwassers mit Abrieb oder ähnlichem erfolgen kann.

In der Figur 6 ist das Membranventil 10 in einem Querschnitt durch die Stössel 19, 20 dargestellt, wobei der Schnitt nicht zentrisch durch die Antriebswelle 31 verläuft. Der Antriebshebel 33 sitzt auf der Antriebswelle 31 der Nockenscheibe 25, welche die Drehachse 32 definiert. Die Nockenscheibe 25 weist eine Struktur mit Rampen, den eigentlichen Nocken, auf, welche die Stössel 19, 20 aus ihrer Ruheposition verschieben. In der dargestellten Abbildung befinden sich beide Stössel 19, 20 in einer Ruheposition. Die beiden Stössel 19, 20 stehen in Wirkverbindung mit der Verschlussmembran 18 um diese entsprechend auslenken zu können. Unterhalb der Verschlussmembran 18 ist ein Ventilraum 13 ausgebildet, welcher über den Schlauchanschluss 11 durch den Einlasskanal 12a mit Brühwasser gefüllt wird. Je nach Position der Stössel 19, 20 wird die Membran 18 auf eine Dichtfläche 16 der ersten Auslassöffnung 14 oder der zweiten Auslassöffnung 15 gepresst. Diese Dichtfläche 16 ist bei beiden Auslassöffnungen 14, 15 in einer Ebene ringförmige um die Auslassöffnungen 14, 15 angeordnet. Die Dichtflächen 16 stellen eine Auflagefläche dar, auf welche die Membran 18 mit den Stösseln 19, 20 gepresst werden kann.

Die Figuren 7a bis 7c zeigen in einem schematischen Querschnitt die Funktion des Membranventils 10 aus Figur 6 in verschiedenen Positionen, wobei jeweils die entsprechende Stellung der Nockenscheibe 25 in einer perspektivischen Ansicht dargestellt ist. In Figur 7a befindet sich das Membranventil 10 in einer ersten Durchlassposition 27. Entsprechend drückt die Steuerscheibe 25 mit ihrem Nocken auf den Stössel 20, welcher wiederum die Verschlussmembran 18 auslenkt und auf die Dichtfläche 16 der zweiten Auslassöffnung 15 presst. Die zweite Auslassöffnung 15 ist somit verschlossen. Durch die Einlassöffnung 12 wird der Ventilraum 13 mit einer Flüssigkeit, vorzugsweise Wasser aus einer Pumpe, gefüllt, sodass sich die Verschlussmembran 18 von der Dichtfläche 16 der ersten Auslassöffnung 14 abheben kann. Der Stössel 19 befindet sich in seiner Ruheposition, in welche der Nocken der Nockenscheibe 25 nicht einwirkt. Zwar kann der Stössel 19 mit seiner Grundfläche 21 auf der Verschlussmembran 18 aufliegen, drückt diese jedoch nicht auf die Dichtungsfläche 16 der ersten Auslassöffnung 14. Entsprechend besteht bei einem Innendruck eine Fluidverbindung zwischen der Einlassöffnung 12 und der ersten Auslassöffnung 14. Diese Fluidverbindung ist mittels Pfeilen dargestellt.

In Figur 7b befindet sich das Membranventil 10 in der Schliessposition 29. Entsprechend wirkt der Nocken der Nockenscheibe 25 auf beide Stössel 19, 20. Die Verschlussmembran 18 wird durch diese beiden Stössel 19, 20 auf die jeweiligen Dichtungsflächen 16 der ersten und zweiten Auslassöffnung 14, 15 gepresst. Die Auslassöffnungen 14, 15 sind somit verschlossen. Selbst wenn durch die Einlassöffnung 12 eine unter Druck stehende Flüssigkeit in den Ventilraum 13 drückt, bleiben die beiden Auslassöffnungen 14, 15 bis zu einem gewissen Punkt verschlossen. Der Nocken der Nockenscheibe 25 ist so ausgestaltet, dass die Stössel 19, 20 nicht komplett ausgelenkt sind. Entsprechend kann bei einem unerwarteten Überdruck im Bereich von 5 bis 8 bar die Membran 18 komprimiert und abgehoben werden. Der Überdruck kann über die beiden Auslassöffnungen 14, 15 abgebaut werden. Dies ist in der Figur mit den punktierten Pfeilen angedeutet.

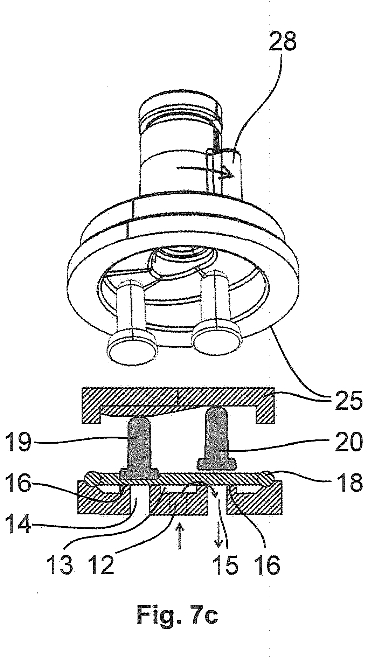

Die Figur 7c zeigt nun das Membranventil 10 in der zweiten Durchlassposition 28. Die Nockenscheibe 25 drückt mit ihrer Nocke auf den Stössel 19, welcher wiederum die Verschlussmembran 18 auf die Dichtfläche 16 der ersten Auslassöffnung 14 drückt. Die Auslassöffnung 14 ist somit verschlossen. Der Stössel 20 befindet sich in Ruheposition und die Verschlussmembran 18 wird durch den Druck im Ventilraum 13 ausgehend von der Einlassöffnung 12 von der Dichtfläche 16 der zweiten Auslassöffnung 15 abgehoben. Die zweite Auslassöffnung 15 ist somit offen. Die entsprechende Fluidverbindung ist mittels Pfeilen dargestellt.

In den beiden Durchlasspositionen 27, 28 gemäss den Figuren 7a und 7c ist jeweils eine Auslassöffnung 14 oder 15 offen, während die andere Auslassöffnung verschlossen ist. Durch die Verwendung einer komprimierbaren Verschlussmembran 18 wird eine Sicherheitsfunktion ermöglicht. Wenn beispielsweise im Falle der Durchlassposition 27 nach Figur 7a die eigentlich offene Auslassöffnung 14 versperrt oder verstopft ist, kann sich trotz vollständig ausgelenktem Stössel 20 die Verschlussmembran 18 durch den sich aufbauenden Innendruck weiter komprimieren, so dass der Überdruck durch die eigentlich verschlossene Auslassöffnung 15 abgebaut und begrenzt wird. Eine Beschädigung der Schläuche, der Pumpe, des Erhitzers oder der Maschine kann so verhindert werdend. Durch eine entsprechende konstruktive Ausgestaltung und/oder durch Wahl der Materialeigenschaften der Ventilmembran 18 kann die Sicherheitsfunktion derart eingestellt werden, dass diese beispielsweise erst bei einem Überdruck im Bereich von 20 bis 25 bar einsetzt. Entsprechend kann gewährleistet werden, dass trotzdem beispielsweise ein Espresso mit einem Druck von bis zu 18 bar extrahiert werden kann. Selbstverständlich sind aber auch andere Druckwerte einstellbar.

## Patentansprüche

1. Getränkezubereitungsmaschine (1), insbesondere Kaffeemaschine, umfassend zwei Brühkammern (2, 3) zur Aufnahme eines Getränkesubstrats (4) und ein Ventil (10) zum Umschalten einer Flüssigkeitszufuhr zu den einzelnen Brühkammern (2, 3), **dadurch gekennzeichnet, dass** das Ventil (10) ein Membranventil ist und eine Einlassöffnung (12) zur Flüssigkeitszufuhr, eine erste Auslassöffnung (14) für die erste Brühkammer (2) und eine zweite Auslassöffnung (15) für die zweite Brühkammer (3), sowie eine Verschlussmembran (18) aufweist.

2. Getränkezubereitungsmaschine (1) nach Anspruch 1, **dadurch gekennzeichnet, dass** das Ventil (10) für jede Auslassöffnung (14, 15) einen Stössel (19, 20) aufweist, mit dem die Verschlussmembran (18) gegen die entsprechende Auslassöffnung (14, 15) pressbar ist.

3. Getränkezubereitungsmaschine (1) nach Anspruch 2, **dadurch gekennzeichnet, dass** das Ventil (10) eine Nockenscheibe (25) zum Ansteuern der Stössel (19, 20) aufweist.

4. Getränkezubereitungsmaschine (1) nach Anspruch 3, **dadurch gekennzeichnet, dass** die Nockenscheibe (25) zum Ansteuern der Stössel (19, 20) drehbeweglich im Ventil (10) gelagert ist.

5. Getränkezubereitungsmaschine (1) nach einem der vorhergehenden Ansprüche, **dadurch gekennzeichnet, dass** das Ventil (10) eine erste und eine zweite Durchlassposition (27, 28) aufweist, in der die erste und/oder die zweite Auslassöffnung (14, 15) offen sind.

6. Getränkezubereitungsmaschine (1) nach Anspruch 5, **dadurch gekennzeichnet, dass** in der ersten Durchlassposition (27) einzig die erste Auslassöffnung (14) offen und in der zweiten Durchlassposition (28) einzig die zweite Auslassöffnung (15) offen ist.

7. Getränkezubereitungsmaschine (1) nach einem der vorhergehenden Ansprüche, **dadurch gekennzeichnet, dass** das Ventil (10) eine Schliessposition (29) aufweist in der alle Auslassöffnungen (14, 15) verschlossen sind.

8. Getränkezubereitungsmaschine (1) nach einem der vorhergehenden Ansprüche, **dadurch gekennzeichnet, dass** das Ventil (10) ein Sicherheitsventil ist und eine sich bei einem vorbestimmten Druck öffnenbare Struktur aufweist.

9. Getränkezubereitungsmaschine (1) nach einem der vorhergehenden Ansprüche, **dadurch gekennzeichnet, dass** umlaufend um jede Auslassöffnung (14, 15) eine in einer Ebene verlaufende Dichtfläche (16) angeordnet ist.

10. Getränkezubereitungsmaschine (1) nach Anspruch 9, **dadurch gekennzeichnet, dass** die Dichtfläche (16) einen Durchmesser aufweist, welcher kleiner oder gleich einem Durchmesser einer Grundfläche (21) eines entsprechenden Stössels (19, 20) ist.

11. Getränkezubereitungsmaschine (1) nach einem der vorhergehenden Ansprüche, **dadurch gekennzeichnet, dass** das Ventil (10) mechanisch über einen Antriebshebel (33) von einem Benutzer verstellbar ist.

12. Getränkezubereitungsmaschine (1) nach Anspruch 11, **dadurch gekennzeichnet, dass** der Antriebshebel (33) mit einem insbesondere linear verschiebbar gelagerten Steuerelement (36) eines Benutzerinterfaces mechanisch gekoppelt ist.

13. Getränkezubereitungsmaschine (1) nach Anspruch 12, **dadurch gekennzeichnet, dass** der Antriebshebel (33) ein Zahnsegment (34) aufweist, welches mit einer Zahnstange (37) des Steuerelementes (36) zusammenwirkt.

14. Getränkezubereitungsmaschine (1) nach Anspruch 3 und einem der Ansprüche 4 bis 10, **dadurch gekennzeichnet, dass** die Nockenscheibe (25) des Ventils (10) von einem Elektromotor mit einem Getriebe und mit einer Positionserkennung zur korrekten Einstellung der Ventilstellungen antreibbar ist.

15. Getränkezubereitungsmaschine (1) nach einem der vorhergehenden Ansprüche, **dadurch gekennzeichnet, dass** die Verschlussmembran (18) ein komprimierbares Material, insbesondere ein Silikonmaterial oder ein Ethylen-Propylen-DienKautschuk (EPDM), aufweist.

## Claims

1. Beverage preparation machine (1), more particularly a coffee machine, comprising two brewing chambers (2, 3) for receiving a beverage substrate (4) and a valve (10) for switching over a liquid supply to the individual brewing chambers (2, 3), **characterized in that** the valve (10) is a membrane valve and has an inlet opening (12) for supplying the liquid, a first outlet opening (14) for the first brewing chamber (2) and a second outlet opening (15) for the second brewing chamber (3), as well as a closing membrane (18).

2. Beverage preparation machine (1) according to Claim 1, **characterized in that** the valve (10) has for each outlet opening (14, 15) a tappet (19, 20) with which the closing membrane (18) can be pressed against the corresponding outlet opening (14, 15).

3. Beverage preparation machine (1) according to Claim 2, **characterized in that** the valve (10) has a cam disc (25) for controlling the tappets (19, 20).

4. Beverage preparation machine (1) according to Claim 3, **characterized in that** the cam disc (25) is mounted rotatably in the valve (10) for controlling the tappets (19, 20).

5. Beverage preparation machine (1) according to one of the preceding claims, **characterized in that** the valve (10) has a first and a second passage position (27, 28) in which the first and/or the second outlet openings (14, 15) are open.

6. Beverage preparation machine (1) according to Claim 5, **characterized in that** in the first passage position (27) only the first outlet opening (14) is open and in the second passage position (28) only the second outlet opening (15) is open.

7. Beverage preparation machine (1) according to one of the preceding claims, **characterized in that** the valve (10) has a closing position (29) in which all the outlet openings (14, 15) are closed.

8. Beverage preparation machine (1) according to one of the preceding claims, **characterized in that** the valve (10) is a safety valve and has a structure which can open in the event of a predetermined pressure.

9. Beverage preparation machine (1) according to one of the preceding claims, **characterized in that** a sealing surface (16) running in one plane is arranged circumferentially around each outlet opening (14, 15).

10. Beverage preparation machine (1) according to Claim 9, **characterized in that** the sealing surface (16) has a diameter which is less than or equal to a diameter of a base surface (21) of a corresponding tappet (19, 20).

11. Beverage preparation machine (1) according to one of the preceding claims, **characterized in that** the valve (10) can be adjusted mechanically by a user via a drive lever (33).

12. Beverage preparation machine (1) according to Claim 11, **characterized in that** the drive lever (33) is coupled mechanically to a more particularly linearly displaceably mounted control element (36) of a user interface.

13. Beverage preparation machine (1) according to Claim 12, **characterized in that** the drive lever (33) has a toothed segment (34) which interacts with a toothed rod (37) of the control element (36).

14. Beverage preparation machine (1) according to Claim 3 and one of Claims 4 to 10, **characterized in that** the cam disc (25) of the valve (10) can be driven by an electric motor with a gear and with a position recognition for correctly setting the valve positions.

15. Beverage preparation machine (1) according to one of the preceding claims, **characterized in that** the closing membrane (18) comprises a compressible material, more particularly a silicon material or an ethylene-propylene-diene rubber (EPDM).

## Revendications

1. Machine de préparation de boissons (1), en particulier machine à café, comportant deux chambres à infusion (2, 3) servant à recevoir un substrat de boisson (4) et une soupape (10) servant à commuter une alimentation en liquide vers les chambres à infusion (2, 3) individuelles, **caractérisée en ce que** la soupape (10) est une soupape à membrane et comprend une ouverture d'entrée (12) pour l'alimentation en liquide, une première ouverture de sortie (14) pour la première chambre à infusion (2) et une deuxième ouverture de sortie (15) pour la deuxième chambre à infusion (3), ainsi qu'une membrane de fermeture (18).

2. Machine de préparation de boissons (1) selon la revendication 1, **caractérisée en ce que** la soupape (10) comprend un poussoir (19, 20) pour chaque ouverture de sortie (14, 15), à l'aide duquel la membrane de fermeture (18) peut être pressée contre l'ouverture de sortie (14, 15) correspondante.

3. Machine de préparation de boissons (1) selon la revendication 2, **caractérisée en ce que** la soupape (10) comprend un disque à came (25) servant à commander le poussoir (19, 20).

4. Machine de préparation de boissons (1) selon la revendication 3, **caractérisée en ce que** le disque à came (25) servant à commander le poussoir (19, 20) est monté de manière mobile en rotation dans la soupape (10).

5. Machine de préparation de boissons (1) selon l'une quelconque des revendications précédentes, **caractérisée en ce que** la soupape (10) comprend une première et une deuxième position de passage (27, 28), dans lesquelles la première et/ou la deuxième ouverture de sortie (14, 15) sont ouvertes.

6. Machine de préparation de boissons (1) selon la revendication 5, **caractérisée en ce que**, dans la première position de passage (27), seulement la première ouverture de sortie (14) est ouverte et, dans la deuxième position de passage (28), seulement la deuxième ouverture de sortie (15) est ouverte.

7. Machine de préparation de boissons (1) selon l'une quelconque des revendications précédentes, **caractérisée en ce que** la soupape (10) comprend une position de fermeture (29) dans laquelle toutes les ouvertures de sortie (14, 15) sont fermées.

8. Machine de préparation de boissons (1) selon l'une quelconque des revendications précédentes, **caractérisée en ce que** la soupape (10) est une soupape de sûreté et comprend une structure pouvant s'ouvrir en cas de pression prédéfinie.

9. Machine de préparation de boissons (1) selon l'une quelconque des revendications précédentes, **caractérisée en ce qu'**une surface d'étanchéité (16) s'étendant dans un plan est disposée de manière circonférentielle autour de chaque ouverture de sortie (14, 15).

10. Machine de préparation de boissons (1) selon la revendication 9, **caractérisée en ce que** la surface d'étanchéité (16) présente un diamètre, lequel est inférieur ou égal à un diamètre d'une surface de base (21) d'un poussoir (19, 20) correspondant.

11. Machine de préparation de boissons (1) selon l'une quelconque des revendications précédentes, **caractérisée en ce que** la soupape (10) peut être déplacée mécaniquement par un utilisateur par le biais d'un levier d'entraînement (33).

12. Machine de préparation de boissons (1) selon la revendication 11, **caractérisée en ce que** le levier d'entraînement (33) est accouplé mécaniquement à un élément de commande (36), monté en particulier de manière mobile linéairement, d'une interface utilisateur.

13. Machine de préparation de boissons (1) selon la revendication 12, **caractérisée en ce que** le levier d'entraînement (33) comprend un segment denté (34), lequel coopère avec une crémaillère (37) de l'élément de commande (36).

14. Machine de préparation de boissons (1) selon la revendication 3 et l'une quelconque des revendications 4 à 10, **caractérisée en ce que** le disque à came (25) de la soupape (10) peut être entraîné par un moteur électrique comprenant une transmission et une détection de position pour régler correctement les positions de soupape.

15. Machine de préparation de boissons (1) selon l'une quelconque des revendications précédentes, **caractérisée en ce que** la membrane de fermeture (18) comprend un matériau compressible, en particulier un matériau de silicone ou un caoutchouc éthylène-propylène-diène (EPDM).
